# EUROPEAN PATENT APPLICATION

(11) **EP 4 671 030 A1**
(43) Date of publication of application: **31.12.2025**
(21) Application number: 25185998.9
(22) Date of filing: 27.06.2025
(51) Int. Cl.: B60L 3/10, B60K 7/00, B60L 3/12, B60L 15/20

(54) **MOTOR CONTROL UNIT FOR TIRE BLOWOUT CONTROL, METHOD FOR CONTROLLING TIRE BLOWOUT OF VEHICLE, AND ELECTRIC VEHICLE**

(30) Priority: 29.06.2024 CN 202410867935
(71) Applicant: HUAWEI DIGITAL POWER TECHNOLOGIES CO., LTD., Shenzhen Guangdong 518043 (CN)
(72) Inventor: Yang, Zhao, Shenzhen, 518043 (CN); Yang, Lizhou, Shenzhen, 518043 (CN); Chen, Zhiyin, Shenzhen, 518043 (CN)
(74) Representative: Gill Jennings & Every LLP

(57) **Abstract**

This application provides a motor control unit for controlling a tire blowout and a method for controlling a tire blowout of a vehicle, relates to the field of new energy vehicles, and can be applied to an electric vehicle or a hybrid vehicle. In a traveling process in which a vehicle speed of the electric vehicle is less than or equal to a preset vehicle speed, the motor control unit controls output torque of one motor based on an indication of a torque signal. After the tire blowout occurs on any one of other three wheels in a traveling process in which the vehicle speed of the electric vehicle is greater than the preset vehicle speed, the motor control unit determines that the tire blowout occurs on a wheel whose rotational speed changes abruptly, and adjusts the output torque of the motor to maintain a stable vehicle posture. According to this solution, the motor control unit performs tire blowout detection based on rotational speeds of a plurality of wheels, thereby improving a tire blowout detection speed, reducing control difficulty, and improving reliability and safety of the vehicle.

## Description

### TECHNICAL FIELD

This application relates to the field of new energy vehicles, and more specifically, to a motor control unit for tire blowout control, a method for controlling a tire blowout of a vehicle, and an electric vehicle.

### BACKGROUND

With the development of the automobile industry, a quantity of automobiles increases annually, and traffic safety attracts more concerns. As the only key parts of an automobile that are directly in contact with the ground, tires have important influence on dynamic, braking, smoothness, operation stability, and the like of the automobile during traveling. When the automobile is traveling at a high speed, once a tire blowout occurs on the automobile, dynamic characteristics of the tire change dramatically, balance of the automobile is broken, and the automobile deflects from an original traveling track. In this case, if a driver performs an incorrect operation in panic, the automobile may directly lose control, or even overturns, causing an extremely serious consequence. A tire blowout at a high speed is one of main reasons for causing the vehicle to be out of control and serious traffic accidents. Because a large quantity of drivers lack experience in handling tire blowout accidents, and even take improper operations due to factors such as an external environment and a psychological factor, about one third of traffic accidents on highways in China are caused by a tire blowout. In practice, a severe tire blowout accident at a high speed often occurs within 0.1s, leaving very short response and control time for a driver and a vehicle.

A tire blowout safety control technology can improve safety of the vehicle to a great extent. Currently, a mainstream method for detecting and controlling a tire blowout is identifying and locating, through tire pressure or wheel speed monitoring, a wheel on which the tire blowout occurs, and using a braking system to control a vehicle after the tire blowout occurs. However, braking response delay time is long, real-time performance is poor, intervention control is not performed in a timely manner, and stability is poor.

Therefore, how to quickly detect and control the tire blowout fault of the vehicle to improve the safety of the vehicle is an urgent problem to be resolved.

### SUMMARY

This application provides a motor control unit for tire blowout control, a method for controlling a tire blowout of a vehicle, and an electric vehicle. A tire blowout fault is identified and a faulty wheel is located by the motor control unit based on changes of rotational speeds of a plurality of wheels, and transverse control of the vehicle is implemented through distributed motor torque control, so that a tire blowout control speed can be improved, control difficulty can be reduced, and vehicle reliability and safety can be improved.

According to a first aspect, this application provides a motor control unit for tire blowout control of an electric vehicle. The electric vehicle includes four motors, four motor control units, and four wheels, one of the motor control units is configured to control one of the motors to drive one of the wheels, and the other three motor control units are respectively configured to control the other three motors to drive the other three wheels.

In a traveling process of the electric vehicle, the motor control unit is configured to receive a torque signal output by at least one of a vehicle control unit and an accelerator pedal of the electric vehicle. The torque signal indicates output torque of the motor.

In a traveling process in which a vehicle speed of the electric vehicle is less than or equal to a preset vehicle speed, the motor control unit is configured to control output torque of the motor based on the indication of the torque signal.

After a tire blowout occurs on any one of the other three wheels in a traveling process in which the vehicle speed of the electric vehicle is greater than the preset vehicle speed, the motor control unit is configured to adjust output torque of the motor.

The motor control unit is configured to control the motor to output the torque. The motor is configured to drive the one of the four wheels of the vehicle. In a process of outputting the torque by the motor, when the tire blowout occurs on a wheel other than the one wheel, the motor control unit is configured to control the motor to adjust the output torque, and adjusted torque is used to drive the one wheel to adjust a traveling direction of the vehicle. The motor control unit is applicable to an electric vehicle or a hybrid vehicle. The vehicle may be a distributed motor or a centralized motor architecture, and has a plurality of motors and a plurality of motor control units. The motor control unit may be any one of the plurality of motor control units. The motor may be a wheel-side motor or a wheel hub motor, and the motor may independently drive a wheel of the vehicle.

According to the solution of this application, the motor control unit can complete tire blowout detection and tire blowout control, thereby reducing signal transmission time between different systems, improving stability of a control system, and performing timely intervention control. This reduces a control torque value required for implementing vehicle posture and track control, reduces control difficulty, and improves safety of the vehicle.

With reference to the first aspect, in some implementations of the first aspect, after the tire blowout occurs on the any one of the other three wheels in the traveling process in which the vehicle speed of the electric vehicle is greater than the preset vehicle speed, the motor control unit is configured to: in response to an abrupt change of a rotational speed of the any one of the other three motors, adjust the output torque of the motor. The abrupt change of the rotational speed of the any one of the other three motors means that an increased value of the rotational speed of the any one of the other three motors is greater than an increased value of a rotational speed of the motor within preset duration.

The motor control unit performs tire blowout detection and tire blowout control only when the vehicle traveling speed is greater than the preset vehicle speed, to avoid misjudgment made when the vehicle starts and accelerates or travels at a low speed. The preset duration may be a sampling period of a resolver sensor, that is, a time interval between one sampling and a next sampling of the resolver sensor. The preset duration may alternatively be time of signal exchange between the motor control units, or may be a period of time that is set based on a requirement. The preset duration may be a short period of time. When the rotational speed of the motor increases in short time, and rotational speeds of the other motors basically remain unchanged, the tire blowout may occur.

Due to tire blowout braking effect, the rotational speed of the motor of the wheel on which the tire blowout occurs abruptly increases. Therefore, by using the rotational speed of the motor of the wheel on which the tire blowout occurs and the rotational speeds of the motors of the other wheels as a determining criterion, the motor control unit can determine whether the tire blowout occurs and locate the wheel on which the tire blowout occurs.

In the traveling process of the vehicle, if the tire blowout occurs on any one of the four wheels of the vehicle, the wheel on which the tire blowout occurs generates the tire blowout braking effect, a wheel speed abruptly increases, and the traveling direction of the vehicle deflects. To ensure safety of a driver and the safety of the vehicle, the traveling direction of the vehicle needs to be adjusted. The motor control unit can detect that the tire blowout occurs on the wheel, and adjust torque output to the normal wheels. The vehicle can be enabled to generate transverse torque in matching with the torque output to the three normal wheels, so that the vehicle can be controlled in a transverse direction.

According to the solution of this application, determining is performed based on a difference between rotational speeds of the plurality of motors, so that reliability of a detection result is improved, and a misjudgment rate is reduced. The motor control unit performs tire blowout detection based on a rotational speed, of a motor, detected by the resolver sensor, a sampling rate is high, and a communication delay between the motor control units is low. This shortens tire blowout detection time, tire blowout detection and tire blowout control can be both completed in the motor, the control system has high stability, and intervention control is performed in a timely manner. This reduces the control torque value required for implementing vehicle posture and track control, reduces the control difficulty, and improves the safety of the vehicle.

With reference to the first aspect, in some implementations of the first aspect, the electric vehicle includes four resolver sensors, the four resolver sensors are respectively configured to detect rotational speeds of the four motors, each of the four motor control units is configured to receive a rotational speed signal of one of the four resolver sensors, and the rotational speed signal indicates a rotational speed of one of the four motors.

The abrupt change of the rotational speed of the any one of the other three motors means that within the preset duration, an increased value of a rotational speed indicated by a resolver sensor corresponding to the any one of the other three motors is greater than an increased value of a rotational speed indicated by a resolver sensor corresponding to the motor.

The motor control unit provided in this embodiment of this application can determine the rotational speed of the motor based on the rotational speed, of the motor, detected by the resolver sensor. Because sampling frequency and sampling precision of the resolver sensor are high, and the motor control unit can directly obtain a resolver signal, the motor control unit can quickly determine, based on the rotational speeds of the four motors of the electric vehicle, the wheel on which the tire blowout occurs, and adjust output torque of a corresponding motor, thereby improving a control speed and control precision.

With reference to the first aspect, in some implementations of the first aspect, the abrupt change of the rotational speed of the any one of the other three motors further includes: Within the preset duration, the increased value of the rotational speed of the motor whose rotational speed changes abruptly is greater than first amplitude, the increased value of the rotational speed of the motor is less than second amplitude, and the first amplitude is greater than the second amplitude.

The first amplitude and the second amplitude may be set based on a requirement. Different amplitude settings may adjust sensitivity and a misjudgment rate of tire blowout detection of the motor control unit.

With reference to the first aspect, in some implementations of the first aspect, the abrupt change of the rotational speed of the any one of the other three motors further includes: Within the preset duration, a change value of output torque of the motor whose rotational speed changes abruptly is greater than a preset torque amplitude, and the output torque of the motor whose rotational speed changes abruptly increases after the preset duration.

The preset duration may be sampling time of the resolver sensor. The preset duration may be the sampling period of the resolver sensor, that is, the time interval between a sampling and a next sampling of the resolver sensor. The preset duration may alternatively be the time of the signal exchange between the motor control units, or may be the period of time that is set based on the requirement.

The torque output by the motor corresponding to the wheel on which the tire blowout occurs generates a great step fluctuation in short time, and a torque value increases significantly after the torque is stable. This feature can be used to perform further determining in the tire blowout detection. The motor control unit may use the rotational speed of the motor and the output torque of the motor as a determining criterion. After determining, based on the rotational speed, that the tire blowout occurs on the wheel, the motor control unit may determine the output torque of the motor corresponding to the positioned wheel on which the tire blowout occurs. If the output torque corresponding to the wheel changes greatly in the short time, then becomes stable, and is greater than the output torque before the great change, it may be determined that the tire blowout occurs on the wheel.

The output torque is torque actually output by the motor, or may be actual torque applied to the wheel corresponding to the motor. The rotational speed of the motor can be measured, but the output torque is difficult to measure. The output torque may be observed via an output torque observer, and the output torque of the motor can be calculated by measuring the rotational speed of the motor, to observe the output torque.

According to the solution of this application, tire blowout identification and detection are performed based on information about the rotational speed of the motor and the output torque of the motor, to avoid a case of misjudging tire slipping, idle tire spinning, or the like as the tire blowout. The tire blowout detection time is short, the reliability is high, and the misjudgment rate is low.

With reference to the first aspect, in some implementations of the first aspect, in the traveling process in which the vehicle speed of the electric vehicle is greater than the preset vehicle speed, the motor control unit is configured to: in response to the abrupt change of the rotational speed of the any one of the other three motors, actively adjust the output torque of the motor to be less than or greater than the output torque of the motor indicated by the signal.

The motor control unit may independently perform tire blowout control. When detecting that the tire blowout occurs in the vehicle, the motor control unit may not perform control based on the indication of the torque signal received from the vehicle control unit, but directly perform tire blowout control by adjusting torque that needs to be output. When tire blowout control is performed, the torque output by the motor is determined by the motor control unit, and does not change with the torque indicated by the torque signal. In this case, the torque output by the motor controlled by the motor control unit is inconsistent with the torque indicated by the torque signal. In other words, the torque output by the motor controlled by the motor control unit is greater than or less than the torque indicated by the torque signal. In other words, the motor control unit may directly and actively adjust a torque output of the motor based on the rotational speeds of the four motors detected by the four resolver sensors, thereby implementing an internal closed-loop of the motor control unit, shortening a control path, reducing tire blowout control time, and improving tire blowout control precision.

With reference to the first aspect, in some implementations of the first aspect, after the tire blowout occurs in the vehicle, the traveling direction of the vehicle deflects. To control the traveling direction of the vehicle, transverse torque opposite to a deflection direction needs to be applied to the vehicle via a normal wheel, to adjust the direction of the vehicle. The motor control unit can calculate yaw control torque required for adjusting the traveling direction of the vehicle based on input information like the speed, a steering angle, a yaw angular velocity, and a centroid side deflection angle that are of the vehicle.

The motor control unit is configured to calculate, based on a status signal of the vehicle, torque separately output by the motors configured to drive the four wheels. The status signal of the vehicle includes the speed, the steering angle, the yaw angular velocity, and the centroid side deflection angle that are of the vehicle. The torque separately output by the motors configured to drive the four wheels forms yaw control torque, the yaw control torque is used to control the traveling direction of the vehicle, the yaw control torque is equal to deflection torque generated by the tire blowout of the vehicle, a direction of the yaw control torque is opposite to a direction of the deflection torque generated by the tire blowout of the vehicle, and the deflection torque is less than or equal to a control threshold.

It should be understood that, in the traveling process of the vehicle, a range in which the torque of the motor can be adjusted is limited. In other words, a torque increase amount and a torque decrease amount of the normal wheel are limited. Therefore, there is an upper limit of yaw torque generated by a motor of the normal wheel by applying torque to the vehicle. The upper limit of the yaw torque is the control threshold. When the yaw control torque that is calculated by the motor control unit and that is required for adjusting the traveling direction of the vehicle is less than or equal to the control threshold, the motor control unit can perform tire blowout control by adjusting the output torque. When the yaw control torque is equal to the deflection torque generated by the tire blowout of the vehicle, and the direction of the yaw control torque is opposite to the direction of the deflection torque generated by the tire blowout of the vehicle, the traveling direction of the vehicle can be effectively controlled. If the yaw control torque that is calculated by the motor control unit and that is required for adjusting the traveling direction of the vehicle is greater than the control threshold, the motor control unit cannot completely control the deflection of the vehicle by controlling only the motor to adjust the output torque.

With reference to the first aspect, in some implementations of the first aspect, a wheel on which the tire blowout occurs is a same-side wheel of a wheel corresponding to the motor control unit, and two left wheels of the electric vehicle are same-side wheels, or two right wheels of the electric vehicle are same-side wheels. That the motor control unit is configured to adjust the output torque of the motor includes: The motor control unit is configured to control the motor to increase a torque output.

With reference to the first aspect, in some implementations of the first aspect, the wheel on which the tire blowout occurs is the same-side wheel of the wheel corresponding to the motor control unit, and that the motor control unit is configured to adjust the output torque of the motor includes: After output torque of a motor corresponding to a coaxial wheel of the wheel on which the tire blowout occurs is decreased and output torque of a motor corresponding to a diagonal wheel of the wheel on which the tire blowout occurs is decreased, the motor control unit is configured to increase the output torque of the motor.

Two front wheels of the electric vehicle are coaxial wheels or two rear wheels of the electric vehicle are coaxial wheels, and a left front wheel and a right rear wheel of the electric vehicle are diagonal wheels or a right front wheel and a left rear wheel of the electric vehicle are diagonal wheels.

According to the solution of this application, the torque output of the motor of the wheel opposite to the wheel on which the tire blowout occurs is preferentially controlled, and then the torque output of the motor of the diagonal wheel is controlled. This reduces control changes of all the wheels, and reduces the control difficulty. This can more effectively control a vehicle posture, avoid the vehicle from being out of control due to idle wheel spinning, and improve the safety of the vehicle.

With reference to the first aspect, in some implementations of the first aspect, the wheel on which the tire blowout occurs is a coaxial wheel or a diagonal wheel of the wheel corresponding to the motor control unit, the two front wheels of the electric vehicle are the coaxial wheels or the two rear wheels of the electric vehicle are the coaxial wheels, and the left front wheel and the right rear wheel of the electric vehicle are the diagonal wheels or the right front wheel and the left rear wheel of the electric vehicle are the diagonal wheels.

That the motor control unit is configured to adjust the output torque of the motor includes: The motor control unit is configured to control the motor to decrease the torque output, or control the motor to output reverse torque. A direction of the reverse torque is opposite to a direction of the rotational speed of the motor.

With reference to the first aspect, in some implementations of the first aspect, the wheel on which the tire blowout occurs is the diagonal wheel of the wheel corresponding to the motor control unit. That the motor control unit is configured to adjust the output torque of the motor includes: After the output torque of the motor corresponding to the coaxial wheel of the wheel on which the tire blowout occurs is decreased, the motor control unit is configured to decrease the output torque of the motor.

With reference to the first aspect, in some implementations of the first aspect, the wheel on which the tire blowout occurs is the coaxial wheel of the wheel corresponding to the motor control unit.

That the motor control unit is configured to adjust the output torque of the motor includes: Before torque outputs of the other three motors are adjusted, the motor control unit is configured to control the motor to increase the torque output.

The motor includes a stator winding and a rotor. The motor control unit can control the motor to output the torque by outputting an alternating current to a three-phase stator winding. Magnetic field intensity and a magnetic field direction of the stator can be changed by adjusting a magnitude of the current of the stator winding and a phase of a three-phase current by the motor control unit, to change interaction force between the stator and the rotor, that is, the torque of the motor. The motor control unit changes the phase of the three-phase current output to the motor, so that the rotor cuts a magnetic field generated by the stator winding. Kinetic energy of the rotor is converted into electric energy and input to a power battery. In this case, the motor outputs negative torque. The motor control unit can increase or decrease positive or negative torque of the motor by changing the magnitude of the three-phase current output to the motor.

According to the solution of this application, a level-by-level progressive control policy is used to gradually control and determine the motor based on a specific priority, and the vehicle posture is quickly and effectively adjusted by precisely and efficiently controlling a motor drive system, thereby improving the safety of the vehicle.

When the tire blowout occurs in the vehicle, different control modes may be used for normal wheels at different locations. It should be understood that the vehicle usually includes the four wheels. The four wheels may be divided into two left-side wheels and two right-side wheels, and the four wheels may alternatively be divided into two front-axle wheels and two rear-axle wheels. When the tire blowout occurs in the vehicle, wheels at different locations have different control priorities. Torque decrease control is performed prior to torque increase control during the tire blowout control. A control priority of the wheel that is coaxial with the wheel on which the tire blowout occurs and that is on an opposite side is higher than control priorities of the other motors. Torque decrease control may be performed on the wheel on the opposite side of the wheel on which the tire blowout occurs. In other words, a positive torque output of the motor is decreased, or the motor is enabled to output the negative torque. Torque increase control may be performed on the wheel on the opposite side of the wheel on which the tire blowout occurs. In other words, the positive torque output of the motor is increased.

With reference to the first aspect, in some implementations of the first aspect, the motor control unit includes a signal interface, and the motor control unit is configured to receive, through the signal interface, rotational speed signals output by the other three motor control units. Each rotational speed signal indicates rotational speeds of the other three motors.

The motor control unit is configured to receive a detection signal from the resolver sensor and a rotational speed signal from another motor control unit of the vehicle. The resolver sensor is configured to detect the rotational speed of the motor, the detection signal indicates the rotational speed of the motor, the rotational speed signal indicates a rotational speed of another motor of the vehicle, and the motor control unit is configured to detect, based on the rotational speed of the motor and the rotational speed of the another motor, the wheel, of the four wheels, on which the tire blowout occurs.

The motor control unit is connected to the resolver sensor. The resolver sensor is responsible for monitoring and extracting the rotational speed of the motor, has a high sampling rate, and sends the sampled rotational speed of the motor to the motor control unit. The plurality of motor control units of the vehicle may be connected through a controller area network CAN bus, a local interconnect network LIN bus, or a hard wire, and the plurality of motor control units exchange signals through the connection. Each motor control unit may obtain a rotational speed of a motor from a resolver sensor of a corresponding motor. The motor control unit may receive, through the CAN bus, the LIN bus, or the hard wire, the rotational speed signal sent by the another motor control unit, so that the motor control unit can obtain the rotational speeds of all the motors of the vehicle. When the tire blowout occurs on a wheel of the vehicle, a rotational speed of a motor corresponding to the wheel abruptly increases, so that the wheel, of the four wheels, on which the tire blowout occurs can be detected based on a change of the rotational speed.

The motor control unit provided in this application collects the rotational speed of the motor via the resolver sensor, and performs tire blowout detection based on the rotational speeds of the four motors. In comparison with tire blowout detection performed by a wheel speed sensor, the sampling precision of the resolver sensor is high, and a signal transmission speed is high. The motor control unit implements the internal closed-loop based on a signal of the resolver sensor, to shorten a signal transmission link, and improve the control speed and the control precision.

According to a second aspect, this application provides a method for controlling a tire blowout of an electric vehicle. The electric vehicle includes four motors, four motor control units, and four wheels, and the four motor control units are respectively configured to control the four motors to drive the four wheels. The method for controlling the tire blowout includes: in a first time period, when a vehicle speed of the electric vehicle is less than or equal to a preset vehicle speed, controlling each of the four motors to output output torque indicated by a torque signal;
in a second time period after the first time period, when the vehicle speed of the electric vehicle is greater than the preset vehicle speed, controlling each of the four motors to output output torque indicated by the torque signal, where the output torque indicated by the torque signal during the second time period is greater than the output torque indicated by the torque signal during the first time period; and
in a third time period after the second time period, when the vehicle speed of the electric vehicle is greater than the preset vehicle speed and the tire blowout occurs on any one of the four wheels, adjusting torque outputs of three motors corresponding to three wheels other than the any wheel on which the tire blowout occurs.

In a traveling process in which the vehicle speed of the electric vehicle is less than or equal to the preset vehicle speed, a tire blowout function is not triggered. In this case, the four motor control units control the four motors to output the output torque indicated by the torque signal. In a traveling process in which the vehicle speed of the electric vehicle is greater than the preset vehicle speed, the tire blowout function is triggered. In this case, the tire blowout occurs on the any one of the four wheels, and the torque outputs of the three motors corresponding to the three wheels other than the any wheel on which the tire blowout occurs are adjusted to maintain stability of the vehicle.

With reference to the second aspect, in some implementations of the second aspect, adjusting the torque outputs of the three motors corresponding to the three wheels other than the any wheel on which the tire blowout occurs includes: actively adjusting the torque output torque of each of the three motors to be greater than or less than the output torque indicated by the torque signal.

When detecting that the tire blowout occurs in the vehicle, the motor control unit may not perform control based on the indication of the torque signal received from a vehicle control unit, but directly perform tire blowout control by adjusting torque that needs to be output. When tire blowout control is performed, the torque output by the motor is determined by the motor control unit, and does not change with the torque indicated by the torque signal. In this case, the torque output by the motor controlled by the motor control unit is inconsistent with the torque indicated by the torque signal. In other words, the torque output by the motor controlled by the motor control unit is greater than or less than the torque indicated by the torque signal.

With reference to the second aspect, in some implementations of the second aspect, adjusting the torque outputs of the three motors corresponding to the three wheels other than the any wheel on which the tire blowout occurs includes: controlling a motor corresponding to a coaxial wheel of the wheel on which the tire blowout occurs to decrease a torque output; controlling a motor corresponding to a diagonal wheel of the wheel on which the tire blowout occurs to decrease a torque output; and controlling a motor corresponding to a same-side wheel of the wheel on which the tire blowout occurs to increase a torque output. The any wheel on which the tire blowout occurs and the same-side wheel of the any wheel on which the tire blowout occurs are both left wheels of the electric vehicle or right wheels of the electric vehicle.

According to the solution of this application, a level-by-level progressive control policy is used to gradually control and determine the motor based on a specific priority, and a vehicle posture is quickly and effectively adjusted by precisely and efficiently controlling a motor drive system, thereby improving safety of the vehicle.

According to a third aspect, this application provides an electric vehicle. The electric vehicle includes four motors, four motor control units, four wheels, a vehicle control unit, and an accelerator pedal, and the four motor control units are respectively configured to control the four motors to drive the four wheels.

Each motor control unit is configured to receive a torque signal output by at least one of the vehicle control unit and the accelerator pedal of the electric vehicle. The torque signal indicates output torque of the motor. In a traveling process in which a vehicle speed of the electric vehicle is less than or equal to a preset vehicle speed, each motor control unit controls the output torque of the motor based on the indication of the torque signal.

After a tire blowout occurs on any one of the four wheels in a traveling process in which the vehicle speed of the electric vehicle is greater than the preset vehicle speed, three motor control units other than a motor control unit corresponding to the wheel on which the tire blowout occurs are respectively configured to actively adjust output torque of corresponding three motors to be less than or greater than the output torque indicated by the torque signal.

Specifically, for beneficial effect of another aspect, refer to beneficial effect described in the first aspect. Details are not described herein again.

### BRIEF DESCRIPTION OF DRAWINGS

FIG. 1 is a diagram of an architecture of a vehicle according to an embodiment of this application;
FIG. 2 is a diagram of another architecture of a vehicle according to an embodiment of this application;
FIG. 3 is a diagram of a tire blowout process according to an embodiment of this application;
FIG. 4 is a diagram of another tire blowout process according to an embodiment of this application;
FIG. 5 is a diagram of other tire blowout control according to an embodiment of this application;
FIG. 6 is a diagram of other tire blowout control according to an embodiment of this application;
FIG. 7 is a diagram of other tire blowout control according to an embodiment of this application; and
FIG. 8 is a diagram of a method for controlling a tire blowout according to an embodiment of this application.

### DESCRIPTION OF EMBODIMENTS

The following describes technical solutions of this application with reference to accompanying drawings. Detailed descriptions and accompanying drawings of the following embodiments are used to describe principles of this application as examples, but cannot be used to limit the scope of this application. In other words, this application is not limited to the described embodiments.

A tire blowout at a high speed is one of main reasons for causing a vehicle to be out of control and serious traffic accidents. As the only key parts of an automobile that are directly in contact with the ground, tires have important influence on dynamic, braking, smoothness and operation stability of the automobile during traveling. When the automobile is traveling at a high speed, once a tire blowout occurs on the automobile, dynamic characteristics of the tire change dramatically, balance of the automobile is broken, and the automobile deflects from an original traveling track. In practice, a severe tire blowout accident at a high speed often occurs within 0.1s, leaving very short response and control time for a driver and a vehicle. Therefore, developing a fast and efficient tire blowout control technology can greatly improve stability and controllability of the vehicle after the tire blowout occurs, and ensure traveling safety of the vehicle.

In a possible implementation, tire blowout detection and control may identify and locate, through tire pressure or wheel speed monitoring, a wheel on which the tire blowout occurs, and on this basis, use an anti-lock braking system (antilock brake system, ABS)/electronic stability program (electronic stability program, ESP) to perform vehicle control after the tire blowout occurs.

According to a tire pressure or wheel speed sensor-based detection method, a wireless tire pressure sensor is used to identify the tire blowout through tire pressure monitoring. A sampling rate is low, detection time is long, real-time performance is poor, and misjudgment is likely to occur. For example, it takes 1 to 6 seconds to perform detection via a tire pressure detection system, and the AB S/ESP system has long braking response delay time. Braking system-based vehicle control likely causes a great change of a vehicle speed. This is not conducive to maintenance of a current traveling status, and may likely cause a secondary accident in a specific traveling scenario. The tire blowout detection depends on a tire pressure sensor signal; the tire blowout control depends on a motor drive system and a vehicle braking system, signal transmission and real-time exchange are required between different modules, and a control signal transmission link is long. As a result, system stability is prone to problems. Only a single wheel is driven or braking force control is performed only on a single wheel, an upper limit of vehicle yaw control is low.

This application provides a motor control unit for controlling a tire blowout and a method for controlling a tire blowout of a vehicle. When the tire blowout occurs, the motor control unit performs level-by-level drive control on wheels by controlling torque of distributed motors, to implement transverse control of the vehicle, and an upper limit of yaw control is high. In addition, the motor control unit can detect the tire blowout by combining rotational speeds and output torque of the motors. This can improve a tire blowout control response speed, so that a control system can make an early intervention. This reduces control difficulty, and improves reliability and safety of the vehicle.

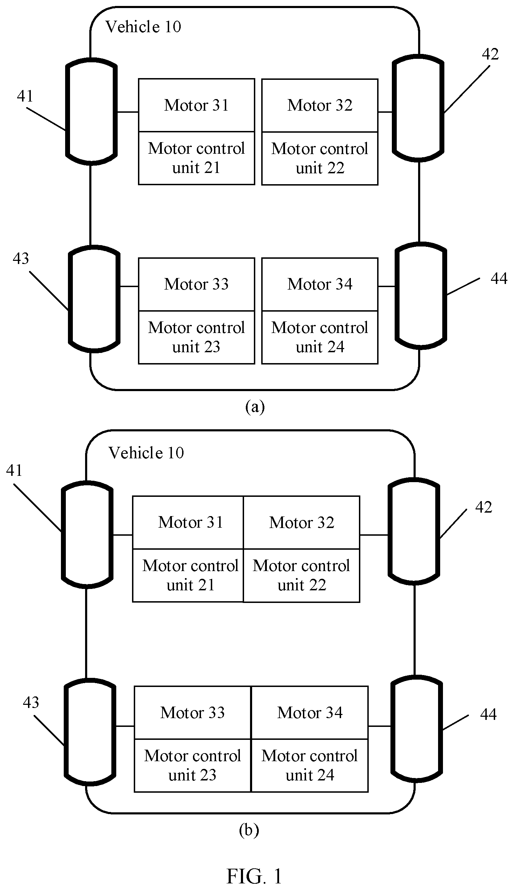

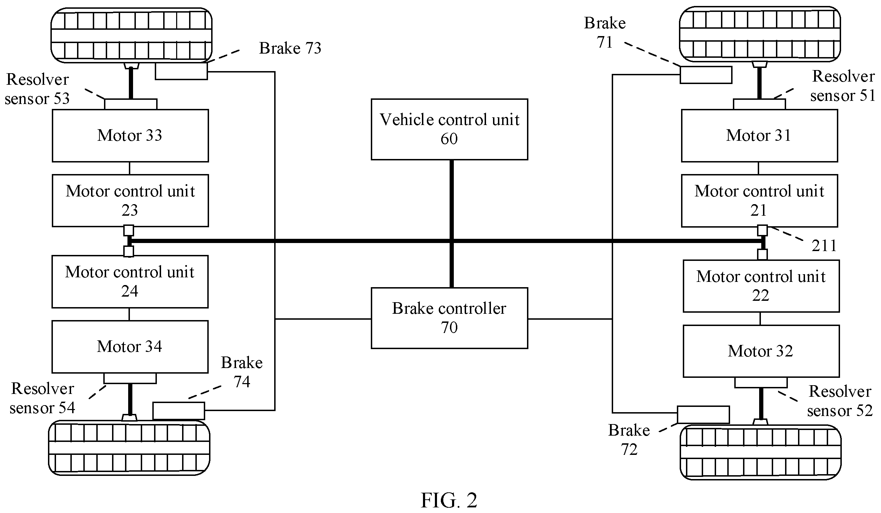

FIG. 1 and FIG. 2 are diagrams of architectures of an electric vehicle 10 according to an embodiment of this application. With reference to FIG. 1 and FIG. 2, the electric vehicle 10 includes four wheels, four motor control units, four motors, a vehicle control unit 60, a braking controller 70, and four brakes.

As shown in (a) in FIG. 1, the electric vehicle 10 may be a wheel-side four-motor drive architecture. The motors are disposed on sides of driving wheels, and are controlled by the respective motor control units. The electric vehicle 10 may be a centralized four-motor drive architecture shown in (b) in FIG. 1, and two motors configured to drive two front wheels or two rear wheels are disposed together.

The four motor control units include a motor control unit 21, a motor control unit 22, a motor control unit 23, and a motor control unit 24. The four motors include a motor 31, a motor 32, a motor 33, and a motor 34. The motor control unit 21 controls the motor 31 to drive a wheel 41, the motor control unit 22 controls the motor 32 to drive a wheel 42, the motor control unit 23 controls the motor 33 to drive a wheel 43, and the motor control unit 24 controls the motor 34 to drive a wheel 44.

Based on locations of the wheels, the wheels can be divided into a left front wheel, a right front wheel, a left rear wheel, and a right rear wheel. The wheels are divided based on axles. The left front wheel and the right front wheel of the four wheels are coaxially connected via a front axle, and the left rear wheel and the right rear wheel are coaxially connected via a rear axle. The wheels are divided based on the locations. The left front wheel and the left rear wheel are on a same side and are located on the left, and the right front wheel and the right rear wheel are on a same side and are located on the right. In other words, in the four wheels of the electric vehicle 10, the left front wheel and the right front wheel are coaxial wheels of each other, and the left rear wheel and the right rear wheel are coaxial wheels of each other; the left front wheel and the left rear wheel are same-side wheels, and the right front wheel and the right rear wheel are same-side wheels; and the left front wheel and the right rear wheel are diagonal wheels of each other, and the right front wheel and the left rear wheel are diagonal wheels of each other. For example, in a traveling process of the electric vehicle, if a tire blowout occurs on the left front wheel, a same-side wheel of the wheel on which the tire blowout occurs is the left rear wheel, opposite-side wheels of the wheel on which the tire blowout occurs are the right front wheel and the right rear wheel, a coaxial wheel of the wheel on which the tire blowout occurs is the right front wheel, and a diagonal wheel of the wheel on which the tire blowout occurs is the right front wheel.

Similarly, in the four motors, the two motors configured to drive the two front wheels are coaxial motors, and the two motors configured to drive the two front wheels are also coaxial motors. In the four motors, two motors configured to drive the two left wheels are same-side motors, and two motors configured to drive the two right wheels are also same-side motors.

In an embodiment, each motor control unit includes a signal interface, and each motor control unit is connected to the other three motor control units through the signal interface, so that signal exchange can be performed between the four motor control units. Signals exchanged between the four motor control units include a rotational speed signal of a motor and the like, and the rotational speed signal indicates a rotational speed of a motor corresponding to each motor control unit. In an embodiment, each motor control unit may also send a torque control signal to the other three motor control units, and the torque control signal indicates the other three motor control units to control corresponding motors to output torque. For example, the motor control unit 21 may send a rotational speed signal of a motor to the other three motor control units, where the rotational speed signal of the motor indicates a rotational speed of the motor 31. Alternatively, the motor control unit 21 may separately send a torque control signal to the other three motor control units, and each of the other three motor control units controls, after receiving the torque control signal from the motor control unit 21, a corresponding motor to output torque indicated by the torque control signal.

In an embodiment, each motor control unit is connected to a resolver sensor through the signal interface. The resolver sensor is configured to detect the rotational speed of the motor controlled by the motor control unit. The motor control unit is configured to: receive a signal from the resolver sensor, generate the rotational speed signal based on the signal from the resolver sensor, and send the rotational speed signal to the other three motor control units. Similarly, each motor control unit also receives rotational speed signals sent by the other three motor control units. For example, the motor control unit 21 is configured to connect to a resolver sensor 51 through a signal interface 211. The resolver sensor is configured to detect the rotational speed of the motor 31 controlled by the motor control unit 21. The motor control unit 21 is configured to: receive a signal from the resolver sensor 51, generate a rotational speed signal based on the signal from the resolver sensor 51, and send the rotational speed signal to the other three motor control units. Similarly, the motor control unit 21 also receives rotational speed signals sent by the other three motor control units.

The resolver sensor can accurately detect a location, direction and speed of a motor rotor, and is responsible for monitoring and extracting the rotational speed of the motor. The resolver sensor has a high sampling rate and is directly connected to the motor control unit. The motor control unit 21 may perform tire blowout detection based on rotational speeds of the four motors. In comparison with a wireless tire pressure sensor signal, performing tire blowout detection by the motor control unit via the resolver sensor reduces signal transmission and real-time exchange between different modules, and shortens a signal transmission link. This can improve a tire blowout detection speed. Both tire blowout detection and control can be completed in a motor system, so that a control system is more stable.

In an embodiment, as shown in FIG. 2, the electric vehicle 10 further includes a braking system. The braking system includes a braking controller 70 and four brakes. The four brakes are: a brake 71, a brake 72, a brake 73, and a brake 74. The braking controller 70 is configured to control the four brakes to output braking force to the four wheels of the electric vehicle 10 to brake the electric vehicle 10.

Still refer to FIG. 2. The electric vehicle 10 further includes a vehicle control unit 60. In an embodiment, the vehicle control unit 60 is connected to an accelerator pedal. The vehicle control unit 60 calculates a vehicle torque requirement based on an opening degree of the accelerator pedal in the traveling process of the electric vehicle 10, and sends a torque signal to each of the four motor control units based on the vehicle torque requirement. Each motor control unit controls, based on an indication of the torque signal, a corresponding motor to output torque to drive a corresponding wheel. In an embodiment, the vehicle control unit 60 is connected to a brake pedal. The vehicle control unit 60 calculates a vehicle braking requirement based on an opening degree of the brake pedal in the traveling process of the electric vehicle 10, and sends a brake signal to the braking controller 70 based on the vehicle braking requirement. The braking controller 70 controls a corresponding brake to brake a corresponding wheel based on an indication of the brake signal.

In an embodiment, each motor control unit may alternatively be directly connected to the accelerator pedal, and control, based on a torque signal output by the accelerator pedal, a corresponding motor to output torque.

In the traveling process of the electric vehicle 10, if the tire blowout occurs on any one of the four wheels of the electric vehicle 10, the wheel on which the tire blowout occurs generates tire blowout braking effect, a wheel speed abruptly increases, and a traveling direction of the electric vehicle 10 deflects. To ensure safety of a driver and safety of the electric vehicle 10, the traveling direction of the electric vehicle 10 needs to be adjusted. The motor control unit provided in this application can detect that the tire blowout occurs on the wheel, and adjust, based on the torque control signal, torque output to the normal wheels. The electric vehicle 10 can be enabled to generate transverse torque in matching with the torque output to the three normal wheels, so that the electric vehicle 10 can be controlled in a transverse direction.

The motor control unit provided in this embodiment of this application can implement both a tire blowout detection function and a tire blowout control function. It should be emphasized that the motor control unit herein is specifically any one of the four motor control units shown in (a) in FIG. 1 or (b) in FIG. 1. In other words, the any one of the four motor control units in (a) in FIG. 1 or (b) in FIG. 1 can implement the tire blowout detection function and the tire blowout control function mentioned in this embodiment of this application. The motor control unit 21, the motor control unit 22, the motor control unit 23, and the fourth motor control unit 24 all have a same structure and function. In the following embodiment, the motor control unit 21 is used as an example to describe the tire blowout detection function and the tire blowout control function.

In an embodiment, the motor control unit 21 is configured to control the motor 31 to output torque, and the motor 31 is configured to drive the wheel 41 of the electric vehicle 10. In the traveling process of the electric vehicle 10, the motor control unit 21 is configured to receive a torque signal output by any one of the vehicle control unit 60 and the accelerator pedal in the electric vehicle 10. The torque signal indicates the output torque of the motor 31. In a traveling process in which a vehicle speed of the electric vehicle 10 is less than or equal to a preset vehicle speed, the motor control unit 21 is configured to control the output torque of the motor 31 based on the indication of the torque signal.

In an embodiment, after the tire blowout occurs on any one of three wheels other than the wheel 41 in a traveling process in which the vehicle speed of the electric vehicle 10 is greater than the preset vehicle speed, the motor control unit 21 is configured to adjust the output torque of the motor 31.

The tire blowout detection function provided in this embodiment of this application is enabled only when the vehicle speed of the electric vehicle 10 is greater than the preset vehicle speed. In other words, only when the vehicle speed of the electric vehicle is greater than the preset vehicle speed, the motor control unit 21 detects, by using a rotational speed of the wheel on which the tire blowout occurs and rotational speeds of other wheels as a determining criterion, whether the tire blowout occurs and locates the wheel on which the tire blowout occurs. This is to avoid misjudgment made when the electric vehicle 10 starts and accelerates or travels at a low speed, thereby improving tire blowout detection precision. For example, the preset vehicle speed may be 15 km/h or 20 km/h.

That the motor control unit 21 is configured to adjust the output torque of the motor 31 means that the motor control unit 21 is configured to increase the output torque of the motor 31 or the motor control unit 21 is configured to decrease the output torque of the motor 31. If the tire blowout occurs on the wheel of the electric vehicle 10, the wheel on which the tire blowout occurs generates the tire blowout braking effect, the wheel speed abruptly increases, and the traveling direction of the vehicle deflects. To ensure the safety of the driver and the vehicle, the traveling direction of the vehicle needs to be adjusted. The motor control unit 21 corresponding to the wheel on which the tire blowout does not occur adjusts the output torque of the motor 31 to avoid instability of the electric vehicle 10, and improve traveling safety of the electric vehicle 10.

In an embodiment, after the tire blowout occurs on any one of the three wheels other than the wheel 41 in the traveling process in which the vehicle speed of the electric vehicle 10 is greater than the preset vehicle speed, in response to an abrupt change of a rotational speed of the any one of the three motors other than the motor 31, the motor control unit 21 is configured to adjust the output torque of the motor 31. The abrupt change of the rotational speed of the any one of the other three motors means that an increased value of the rotational speed of the any motor 31 of the other three motors is greater than an increased value of the rotational speed of the motor 31 within preset duration.

Due to the tire blowout braking effect, the rotational speed of the motor corresponding to the wheel on which the tire blowout occurs abruptly increases. Therefore, by using the rotational speed of the motor of the wheel on which the tire blowout occurs and the rotational speeds of the motors of the other wheels as the determining criterion, the motor control unit 21 can determine whether the tire blowout occurs and locate the wheel on which the tire blowout occurs. In other words, after the tire blowout occurs on the wheel of the electric vehicle 10, the rotational speed of the motor corresponding to the wheel on which the tire blowout occurs changes abruptly. Therefore, on this basis, the specific wheel, of the electric vehicle 10, on which the tire blowout occurs can be determined.

In an embodiment, the abrupt change of the rotational speed of the any one of the other three motors includes: Within the preset duration, the increased value of the rotational speed of the motor 31 whose rotational speed changes abruptly is greater than first amplitude, the increased value of the rotational speed of the motor 31 is less than second amplitude, and the first amplitude is greater than the second amplitude.

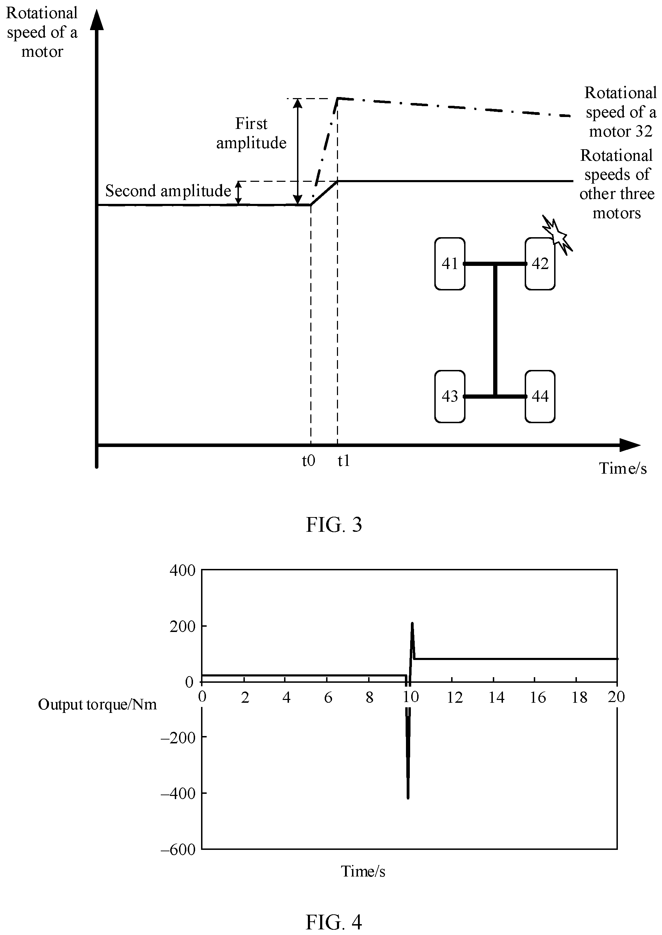

FIG. 3 is a diagram of a rotational speed of a motor when a tire blowout occurs in the electric vehicle 10. As shown in FIG. 3, before a moment t0, the tire blowout does not occur in the electric vehicle 10, and the rotational speeds of the four motors of the electric vehicle 10 are basically the same. At the moment t0, a rotational speed of the motor 32 changes abruptly. In a time period from t0 to t1, an increased value of the rotational speed of the motor 32 is greater than the first amplitude, and increased values of rotational speeds of the three motors other than the motor 32 are less than the second amplitude. In this case, it indicates that the tire blowout occurs on the wheel 42 corresponding to the motor 32. The motor control unit 21 adjusts the output torque of the motor 31.

According to the solution of this application, tire blowout detection and identification of a wheel are directly performed based on change features of rotational speeds of a plurality of wheels, so that a tire blowout detection speed is improved, the tire blowout can be controlled earlier, and control difficulty is reduced.

In an embodiment, the abrupt change of the rotational speed of the any one of the other three motors includes: Within the preset duration, a change value of the output torque of the motor 31 whose rotational speed changes abruptly is greater than a preset torque amplitude, and the output torque of the motor 31 whose rotational speed changes abruptly increases after the preset duration.

FIG. 4 is a diagram of an output torque change of a motor corresponding to a wheel, of the electric vehicle 10, on which the tire blowout occurs. As shown in FIG. 4, a change value of output torque of a motor whose rotational speed changes abruptly is greater than a preset torque amplitude, and the output torque of the motor whose rotational speed changes abruptly increases after the preset duration.

In an embodiment, the preset duration is less than or equal to duration of a sampling period of a resolver sensor, and the sampling period of the resolver sensor is duration of an interval between two sampling moments of the resolver sensor. In an embodiment, the preset duration is time of signal exchange between the four motor control units. To be specific, the preset duration is a time period from time at which the motor control unit 21 obtains data output by the resolver sensor through collection to time at which the other three motor control units receive the rotational speed signal output by the motor control unit 21. In an embodiment, the preset duration is a period of time that is set based on a requirement. The preset duration is a short period of time. When a rotational speed of a motor of a first wheel increases in short time, and rotational speeds of other motors basically remain unchanged, the tire blowout may occur on the first wheel. The first amplitude and the second amplitude may be set based on a requirement. Different amplitude settings may adjust sensitivity and a misjudgment rate of the tire blowout detection of the motor control unit 21.

The torque output by the motor corresponding to the wheel on which the tire blowout occurs generates a great step fluctuation in short time, and a torque value increases significantly after the torque is stable. This feature can be used to perform further determining in the tire blowout detection. The motor control unit 21 may use the rotational speed of the motor and the output torque of the motor as a determining criterion. After determining, based on the rotational speed, that the tire blowout occurs on the wheel, the motor control unit 21 may determine the output torque of the motor corresponding to the positioned wheel on which the tire blowout occurs. If the output torque corresponding to the wheel changes greatly in the short time, then becomes stable, and is greater than the output torque before the great change, it may be determined that the tire blowout occurs on the wheel.

The output torque is torque actually output by the motor, or may be actual torque applied to the wheel corresponding to the motor. The rotational speed of the motor can be measured, but the output torque is difficult to measure. The output torque may be observed via an output torque observer, and the output torque of the motor can be calculated by measuring the rotational speed of the motor, to observe the output torque.

According to the solution of this application, tire blowout identification and detection are performed based on information about the rotational speed of the motor and the output torque of the motor, to avoid a case of misjudging tire slipping, idle tire spinning, or the like as the tire blowout. Tire blowout detection time is short, reliability is high, and the misjudgment rate is low.

The following describes in detail a specific running manner in which the motor control unit 21 provided in this embodiment of this application performs tire blowout control.

When the vehicle speed of the electric vehicle 10 is less than or equal to the preset vehicle speed, the tire blowout detection function is not triggered, and the motor control unit 21 is configured to control the output torque of the first motor 31 based on the indication of the torque signal. The torque signal may be from the vehicle control unit 60. The vehicle control unit 60 calculates a torque requirement of the vehicle based on the opening degree of the accelerator pedal, and sends the torque signal to the motor control unit 21. The motor control unit 21 controls, based on the indication of the torque signal, the motor 31 to output the torque indicated by the torque signal.

When the vehicle speed of the electric vehicle 10 is greater than the preset vehicle speed, it may be determined, based on the foregoing condition, that the tire blowout occurs on the wheel. If the wheel on which the tire blowout occurs is not the wheel corresponding to the motor control unit 21, the motor control unit 21 controls the motor 31 to adjust a torque output to maintain stability of the vehicle.

For example, if a change value of the rotational speed of the motor 32 is greater than the first amplitude within the preset duration, and change values of the rotational speeds of the motor 31, the motor 33, and the motor 34 are all less than the second amplitude within the preset duration, it indicates that the tire blowout occurs on the wheel 42, and the motor control unit 21 controls the motor 31 to adjust the torque output to maintain the stability of the vehicle.

For the motor control unit 21, the motor control unit 21 controls the motor 31, and the motor 31 further drives the wheel 41. After determining a specific location of the wheel on which the tire blowout occurs through tire blowout detection as described above, torque outputs of the four motors are adjusted to maintain the stability of the vehicle. If the tire blowout occurs on the wheel 41, a torque output of a motor other than the motor 31 is adjusted to maintain the stability of the vehicle. If the tire blowout occurs on a wheel other than the wheel 41, the motor control unit 21 controls the motor 31 to adjust the torque output to maintain the stability of the vehicle. In addition, in an embodiment, the motor control unit 21 separately sends, through signal interfaces, torque control signals to the other three motor control units, that is, the motor control unit 22, the motor control unit 23, and the motor control unit 24, to indicate the motor control unit 22, the motor control unit 23, and the motor control unit 24 to respectively control the motor 32, the motor 33, and the motor 34 to adjust torque outputs.

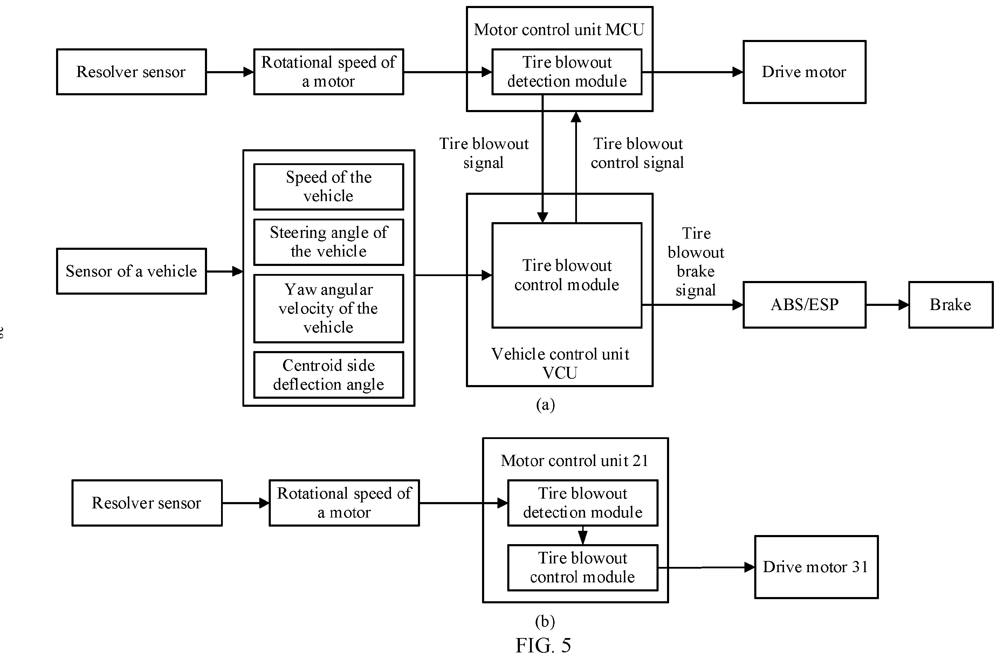

In an embodiment, as shown in (a) in FIG. 5, after determining the wheel on which the tire blowout occurs, the motor control unit 21 sends a tire blowout signal to the vehicle control unit 60. The vehicle control unit 60 sends tire blowout control signals to the motor control unit 21 and the other three motor control units based on the tire blowout signal. The tire blowout control signals indicate the four motor control units to adjust the torque outputs of the four motors. In this case, the vehicle control unit 60 sends a tire blowout brake signal to the braking controller 70, and the braking controller 70 controls the four brakes to output the braking force under the indication of the tire blowout brake signal to maintain the stability of the vehicle.

In an embodiment, as shown in (b) in FIG. 5, after determining the wheel on which the tire blowout occurs, the motor control unit 21 does not send the tire blowout signal to the vehicle control unit 60, but directly controls the motor 31 to adjust the torque output. In other words, the motor control unit 21 can directly perform torque control after performing tire blowout detection based on the rotational speeds of the four motors, so that a closed-loop of an entire control process is implemented inside the motor control unit 21, a control path is shortened, and a control speed and control precision are improved. In this case, in the traveling process in which the vehicle speed of the electric vehicle 10 is greater than the preset vehicle speed, the motor control unit 21 is configured to: in response to the abrupt change of the rotational speed of the any one of the other three motors, actively adjust the output torque of the motor 31 to be less than or greater than the output torque indicated by the torque signal. Because running of the motor control unit 21 is decoupled from the vehicle control unit 60, torque output by a motor controlled by the motor control unit 21 may be different from the torque indicated by the torque signal. In this case, the vehicle control unit 60 actually does not perform torque control on the motor control unit 21. Therefore, in an embodiment, the torque indicated by the torque signal output by the vehicle control unit 60 remains unchanged.

After the tire blowout occurs on the wheel of the electric vehicle 10, the three motor control units corresponding to the other three wheels need to separately control the three motors to adjust the torque outputs to maintain a vehicle posture. The motor control unit 21 is one of the three motor control units corresponding to the other three wheels. After the tire blowout occurs on the wheel of the electric vehicle 10 provided in this embodiment of this application, the three motors corresponding to the other three wheels use a hierarchical control policy. To be specific, a torque output of a motor corresponding to a coaxial wheel of the wheel on which the tire blowout occurs is decreased first, then a torque output of a motor corresponding to a diagonal wheel of the wheel on which the tire blowout occurs is decreased, and finally a torque output of a motor corresponding to a same-side wheel of the wheel on which the tire blowout occurs is increased.

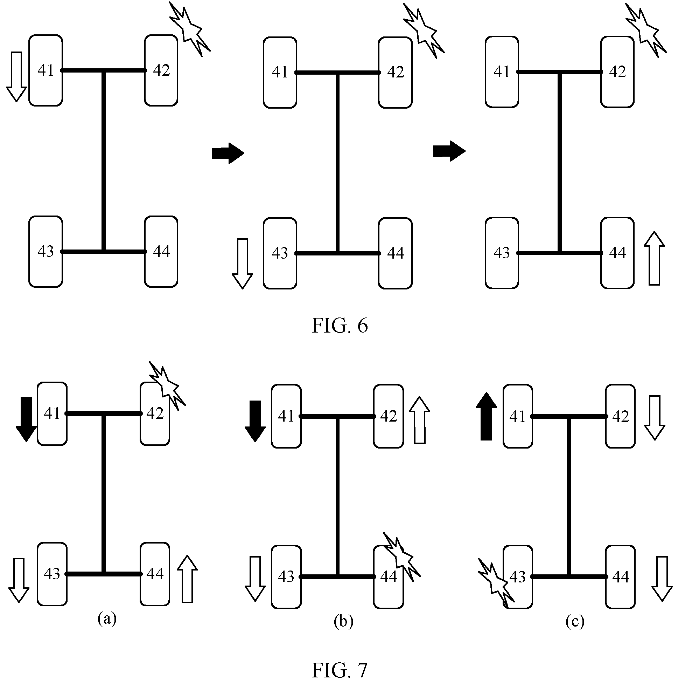

FIG. 7 is a diagram of hierarchical adjustment performed by the four motor control units when the tire blowout occurs in the electric vehicle 10. As shown in FIG. 7, the wheel 41 is the left front wheel, the wheel 42 is the right front wheel, the wheel 43 is the left rear wheel, and the wheel 44 is the right rear wheel. In the traveling process of the electric vehicle 10, the tire blowout occurs on the wheel 42, the wheel 41 is a coaxial wheel of the wheel 42, the wheel 43 is a diagonal wheel of the wheel 42, and the wheel 44 is a same-side wheel of the wheel 42. First, the motor control unit 21 controls the motor 31 to decrease the torque output, then the motor control unit 23 controls the motor 33 to decrease the torque output, and finally the motor control unit 24 controls the motor 34 to reduce the torque output.

In other words, when the tire blowout occurs in the electric vehicle 10, different control modes may be used for normal wheels at different locations. To be specific, torque outputs of two motors corresponding to two opposite wheels of the wheel on which the tire blowout occurs are decreased, and a torque output of a motor of a same-side wheel of the wheel on which the tire blowout occurs correspondingly needs to be increased. When the tire blowout occurs in the electric vehicle 10, control priorities of the wheels at different positions are also different. A torque output of a corresponding motor of the coaxial wheel of the wheel on which the tire blowout occurs is first adjusted, then a torque output of a corresponding motor of the diagonal wheel of the wheel on which the tire blowout occurs is adjusted, and finally a torque output of a corresponding motor of the same-side wheel of the wheel on which the tire blowout occurs is adjusted.

In an embodiment, the wheel 41 corresponding to the motor control unit 21 is the coaxial wheel or the diagonal wheel of the wheel on which the tire blowout occurs. That the motor control unit 21 is configured to adjust the output torque of the motor 31 includes: The motor control unit 21 is configured to: control the motor 31 to decrease the torque output, or control the motor 31 to output reverse torque. A direction of the reverse torque is opposite to a direction of the rotational speed of the motor 31.

The four wheels include two left-side wheels and two right-side wheels. The wheel on which the tire blowout occurs and the wheel 41 corresponding to the motor control unit 21 are opposite wheels. In other words, one of the wheel on which the tire blowout occurs and the wheel 41 is a left wheel and the other is a right wheel. The motor control unit 21 is configured to control the motor 31 to decrease the torque output.

In an embodiment, the wheel corresponding to the motor control unit 21 is the same-side wheel of the wheel on which the tire blowout occurs. That the motor control unit 21 is configured to adjust the output torque of the motor 31 includes: The motor control unit 21 is configured to control the motor 31 to increase the torque output.

For example, the wheel 41 is the left front wheel. If the tire blowout occurs on the right front wheel, the motor control unit 21 is configured to control the motor 31 to decrease the torque output. If the tire blowout occurs on the left rear wheel, the motor control unit 21 is configured to control the motor 31 to increase the torque output.

In an embodiment, the wheel 41 corresponding to the motor control unit 21 is the coaxial wheel of the wheel on which the tire blowout occurs. That the motor control unit 21 is configured to adjust the output torque of the motor 31 includes: Before the torque outputs of the three motors other than the motor 31 are adjusted, the motor control unit 21 is configured to control the motor 31 to decrease the torque output.

According to the foregoing principle of hierarchical adjustment performed by the four motor control units, if the wheel 41 corresponding to the motor control unit 21 is the coaxial wheel of the wheel on which the tire blowout occurs, an adjustment priority of the motor control unit 21 is the highest, that is, before the torque outputs of the three motors other than the motor 31 are adjusted, the motor control unit 21 controls the motor 31 to decrease the torque output.

In (a) in FIG. 7, the tire blowout occurs on the wheel 42, and the wheel 41 is the coaxial wheel of the wheel 42. In this case, the motor control unit 21 first controls the motor 31 to decrease the torque output, the motor control unit 23 then controls the motor 33 to decrease the torque output, and the motor control unit 24 finally controls the motor 34 to increase the torque output.

In an embodiment, the wheel 41 corresponding to the motor control unit 21 is the diagonal wheel of the wheel on which the tire blowout occurs. That the motor control unit 21 is configured to adjust the output torque of the motor 31 includes: After the output torque of the motor 31 corresponding to the coaxial wheel of the wheel on which the tire blowout occurs is decreased, the motor control unit 21 is configured to decrease the output torque of the motor 31.

In (b) in FIG. 6, the tire blowout occurs on the wheel 44, and the wheel 41 is the diagonal wheel of the wheel 44. In this case, the motor control unit 23 first controls the motor 33 to decrease the torque output, the motor control unit 21 then controls the motor 31 to decrease the torque output, and the motor control unit 22 finally controls the motor 32 to increase the torque output.

In an embodiment, the wheel 41 corresponding to the motor control unit 21 is the same-side wheel of the wheel on which the tire blowout occurs. That the motor control unit 21 is configured to adjust the output torque of the motor 31 includes: After the output torque of the motor 31 corresponding to the coaxial wheel of the wheel on which the tire blowout occurs is decreased and the output torque of the motor corresponding to the diagonal wheel of the wheel on which the tire blowout occurs is decreased, the motor control unit 21 is configured to increase the output torque of the motor 31.

In (c) in FIG. 6, the tire blowout occurs on the wheel 43, and the wheel 41 is the same-side wheel of the wheel 44. In this case, the motor control unit 24 first controls the motor 34 to decrease the torque output, the motor control unit 22 then controls the motor 32 to decrease the torque output, and the motor control unit 21 finally controls the motor 31 to increase the torque output.

In an embodiment, the motor control unit 21 is configured to calculate, based on a status signal of the electric vehicle 10, torque separately output by the motors configured to drive the four wheels. The status signal of the electric vehicle 10 includes a speed, a steering angle, a yaw angular velocity, and a centroid side deflection angle that are of the electric vehicle 10. The torque separately output by the motors configured to drive the four wheels forms yaw control torque, the yaw control torque is used to control the traveling direction of the electric vehicle 10, the yaw control torque is equal to deflection torque generated by the tire blowout of the electric vehicle 10, a direction of the yaw control torque is opposite to a direction of the deflection torque generated by the tire blowout of the electric vehicle 10, and the deflection torque is less than or equal to a control threshold. The status signal of the electric vehicle 10 may be from a sensor of the electric vehicle 10, or may be sent by the vehicle control unit 60 to the motor control unit 21.

In an embodiment, the motor control unit 21 is configured to receive the tire blowout control signal from the vehicle control unit 60 of the electric vehicle 10. The torque indicated by the tire blowout control signal and the torque used to drive the other wheels form the yaw control torque, the yaw control torque is used to control the traveling direction of the electric vehicle 10, the yaw control torque is equal to the deflection torque generated by the tire blowout of the electric vehicle 10, the direction of the yaw control torque is opposite to the direction of the deflection torque generated by the tire blowout of the electric vehicle 10, and the deflection torque is less than or equal to the control threshold.

Based on the electric vehicle 10 and the motor control unit provided in embodiments of this application, this application further provides a method, for controlling a tire blowout of a vehicle, applied to the electric vehicle 10. The method for controlling the tire blowout of the vehicle includes:
in a first time period, when a vehicle speed of the electric vehicle is less than or equal to a preset vehicle speed, controlling each of four motors to output output torque indicated by a torque signal;
in a second time period after the first time period, when the vehicle speed of the electric vehicle is greater than the preset vehicle speed, controlling each of the four motors to output output torque indicated by the torque signal, where the output torque indicated by the torque signal during the second time period is greater than the output torque indicated by the torque signal during the first time period; and
in a third time period after the second time period, when the vehicle speed of the electric vehicle is greater than the preset vehicle speed and the tire blowout occurs on any one of four wheels, adjusting torque outputs of three motors corresponding to three wheels other than the any wheel on which the tire blowout occurs.

In a traveling process in which the vehicle speed of the electric vehicle is less than or equal to the preset vehicle speed, a tire blowout function is not triggered. In this case, the four motor control units control the four motors to output the output torque indicated by the torque signal. In a traveling process in which the vehicle speed of the electric vehicle is greater than the preset vehicle speed, the tire blowout function is triggered. In this case, the tire blowout occurs on the any one of the four wheels, and the torque outputs of the three motors corresponding to the three wheels other than the any wheel on which the tire blowout occurs are adjusted to maintain stability of the vehicle.

According to the method for controlling the tire blowout of the vehicle provided in this embodiment of this application, the preset vehicle speed, namely, a lower limit *Vₘᵢₙ* of a tire blowout identification speed, is set. When the vehicle speed exceeds the limit, a tire blowout detection function is enabled, to avoid misjudgment made when the electric vehicle 10 starts and accelerates or travels at a low speed.

After the tire blowout occurs on a wheel of the vehicle 10, "tire blowout braking effect" is generated, resulting in an abrupt step increase of a wheel speed. Based on the change feature, a proportion relationship between the wheel speed of the wheel on which the tire blowout occurs and wheel speeds of other normal wheels may be used as a key indicator for determining the tire blowout. In other words, when an increased value of a rotational speed of any one of the four motors is greater than first amplitude within preset duration, and increased values of rotational speeds of three of the four motors other than the motor are all less than second amplitude within the preset duration, it indicates that the tire blowout occurs on a wheel corresponding to the motor. In this case, the torque outputs of the three motors other than the motor are adjusted to maintain the stability of the vehicle.

For example, if the increased value of the rotational speed of the motor 32 is greater than the first amplitude within the preset duration, and the increased values of the rotational speeds of the motor 31, the motor 33, and the motor 34 are all less than the second amplitude within the preset duration, it indicates that the tire blowout occurs on the wheel 42. The torque outputs of the motor 31, the motor 33, and the motor 34 are adjusted to maintain the stability of the vehicle.

In an embodiment, adjusting the torque outputs of the three motors corresponding to the three wheels other than the any wheel on which the tire blowout occurs includes:
actively adjusting the torque output torque of each of the three motors to be greater than or less than the output torque indicated by the torque signal.

In an embodiment, adjusting the torque outputs of the three motors corresponding to the three wheels other than the any wheel on which the tire blowout occurs includes:
controlling a motor corresponding to a coaxial wheel of the wheel on which the tire blowout occurs to decrease a torque output;
controlling a motor corresponding to a diagonal wheel of the wheel on which the tire blowout occurs to decrease a torque output; and
controlling a motor corresponding to a same-side wheel of the wheel on which the tire blowout occurs to increase a torque output.

The any wheel on which the tire blowout occurs and the same-side wheel of the any wheel on which the tire blowout occurs are both left wheels of the electric vehicle 10 or right wheels of the electric vehicle 10.

In an embodiment, the torque outputs of the three motors are adjusted in response to that the vehicle speed of the electric vehicle 10 is greater than the preset vehicle speed, a change value of the rotational speed of the any one of the four motors is greater than the first amplitude within the preset duration, a change value of the output torque of the motor is greater than a preset torque amplitude within the preset duration, and the output torque of the motor continues to increase after the preset duration. Change values of the rotational speeds of the three of the four motors other than the motor are all less than the second amplitude within the preset duration.

The method for controlling the tire blowout of the vehicle provided in embodiments of this application further includes a tire blowout anti-misjudgment function. Specifically, after the tire blowout occurs, there is a step increase in the rotational speed of the motor, there is a great step fluctuation in short time in the torque of the wheel on which the tire blowout occurs, and a torque value increases significantly after the torque is stable. Based on this change feature of the wheel on which the tire blowout occurs, the change feature of the output torque of the wheel is further observed to exclude a case of misjudging tire slipping, idle tire spinning, or the like as the tire blowout.

In an embodiment, that the torque outputs of the other three motors are adjusted sequentially includes: A torque output of a motor that is coaxial to the motor whose rotational speed changes abruptly is decreased first; then a torque output of a motor that is on a different axis and on a different side from the motor whose rotational speed changes abruptly is decreased; and a torque output of a motor that is on a same side as the motor whose rotational speed changes abruptly is increased. The motor whose rotational speed changes abruptly and the coaxial motor are configured to drive two front wheels of the electric vehicle 10 or two rear wheels of the electric vehicle, and the motor whose rotational speed changes abruptly and the same-side motor are configured to drive two left wheels of the electric vehicle 10 or two right wheels of the electric vehicle.

A torque output of the motor coaxial with the motor driving the wheel on which the tire blowout occurs is first decreased, and torque outputs of the remaining two of the three motors are adjusted.

Other than the motor on a side of the wheel on which the tire blowout occurs, level-by-level control is performed on the other three motors based on required yaw control torque Δ*M_{z}*. Torque change modes (torque increases or torque decreases) of left and right motors are determined based on a direction of Δ*M_{z}.* A maximum torque variation of each motor in a current change form is calculated, and a maximum yaw control torque value that can be implemented by each motor is calculated. When tire blowout control is performed, control priorities of the three motors are: torque decrease control>torque increase control, and a priority of the coaxial opposite motor of the wheel on which the tire blowout occurs is higher than that of other motors. In actual control, control signals are applied to all the motors step by step by performing level-by-level control based on Δ*M_{z}* and the maximum yaw control torque of each motor.

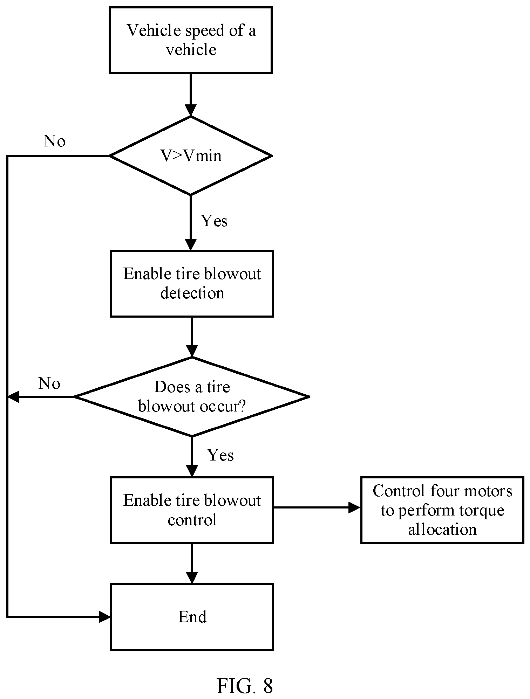

FIG. 8 is a schematic flowchart of a method for controlling a tire blowout of a vehicle according to an embodiment of this application. Specific details of the method for controlling the tire blowout of the vehicle provided in embodiments of this application are described above. Details are not described herein again.

In this embodiment of this application, after the tire blowout occurs on a wheel of the electric vehicle 10, the electric vehicle 10 uses a hierarchical control policy, to improve safety of tire blowout control of the electric vehicle 10. Specifically, the vehicle control unit 60 calculates the yaw control torque Δ*M_{z}* required for current control based on signals, input by a sensor of the electric vehicle 10, like a speed, a front-wheel steering angle, a yaw angular velocity, and a centroid side deflection angle that are of the electric vehicle 10, and compares the yaw control torque Δ*M_{z}* with a specified control threshold Δ*M_{c}*. Δ*M_{c}* is related to a torque output capability of a motor, and is generally greater than or equal to an upper limit of yaw torque that can be applied by a motor on a side of a normal wheel. If Δ*M_{z}* < Δ*M_{c}*, a tire blowout control signal is output. Four motors are used to perform tire blowout control, and perform driving control and torque allocation. Otherwise, a tire blowout brake signal is directly output, and a braking system is activated to perform differential braking control.

According to the solution of this application, a drive/braking system is controlled hierarchically, and based on a required control amount, a control process is divided into two levels: motor drive control and braking system control. The hierarchical control is used. In the first level, vehicle control effect is improved via an electric drive system, and in the second level, an intervention of the braking system is triggered when necessary, to ensure reliability of a control system and safety of the electric vehicle 10.

In several embodiments provided in this application, it should be understood that the disclosed apparatuses may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A motor control unit for tire blowout control of an electric vehicle, wherein the electric vehicle comprises four motors, four motor control units, and four wheels, one of the motor control units is configured to control one of the motors to drive one of the wheels, the other three motor control units are respectively configured to control the other three motors to drive the other three wheels, and in a traveling process of the electric vehicle, the motor control unit is configured to:
receive a torque signal output by at least one of a vehicle control unit and an accelerator pedal of the electric vehicle, wherein the torque signal indicates output torque of the motor;
in a traveling process in which a vehicle speed of the electric vehicle is less than or equal to a preset vehicle speed, control output torque of the motor based on the indication of the torque signal; and
after a tire blowout occurs on any one of the other three wheels in a traveling process in which the vehicle speed of the electric vehicle is greater than the preset vehicle speed, adjust output torque of the motor.

2. The motor control unit according to claim 1, wherein after the tire blowout occurs on the any one of the other three wheels in the traveling process in which the vehicle speed of the electric vehicle is greater than the preset vehicle speed, the motor control unit is configured to:
adjust the output torque of the motor in response to an abrupt change of a rotational speed of any one of the other three motors, wherein the abrupt change of the rotational speed of the any one of the other three motors means that an increased value of the rotational speed of the any one of the other three motors is greater than an increased value of a rotational speed of the motor within preset duration.

3. The motor control unit according to claim 2, wherein the electric vehicle comprises four resolver sensors, the four resolver sensors are respectively configured to detect rotational speeds of the four motors, each of the four motor control units is configured to receive a rotational speed signal of one of the four resolver sensors, and the rotational speed signal indicates a rotational speed of one of the four motors; and
the abrupt change of the rotational speed of the any one of the other three motors means that within the preset duration, an increased value of a rotational speed indicated by a resolver sensor corresponding to the any one of the other three motors is greater than an increased value of a rotational speed indicated by a resolver sensor corresponding to the motor.

4. The motor control unit according to claim 2 or 3, wherein the abrupt change of the rotational speed of the any one of the other three motors comprises:
within the preset duration, the increased value of the rotational speed of the motor whose rotational speed changes abruptly is greater than first amplitude, the increased value of the rotational speed of the motor is less than second amplitude, and the first amplitude is greater than the second amplitude.

5. The motor control unit according to claim 2 or 3, wherein the abrupt change of the rotational speed of the any one of the other three motors comprises:
within the preset duration, a change value of output torque of the motor whose rotational speed changes abruptly is greater than a preset torque amplitude, and the output torque of the motor whose rotational speed changes abruptly increases after the preset duration.

6. The motor control unit according to any one of claims 1 to 5, wherein that the motor control unit is configured to adjust the output torque of the motor comprises:
the motor control unit is configured to actively adjust the output torque of the motor to be less than or greater than the output torque of the motor indicated by the torque signal.

7. The motor control unit according to any one of claims 1 to 6, wherein a wheel on which the tire blowout occurs is a same-side wheel of a wheel corresponding to the motor control unit, and two left wheels of the electric vehicle are same-side wheels, or two right wheels of the electric vehicle are same-side wheels; and
that the motor control unit is configured to adjust the output torque of the motor comprises:
the motor control unit is configured to control the motor to increase a torque output.

8. The motor control unit according to claim 7, wherein that the motor control unit is configured to adjust the output torque of the motor comprises:
after output torque of a motor corresponding to a coaxial wheel of the wheel on which the tire blowout occurs is decreased and output torque of a motor corresponding to a diagonal wheel of the wheel on which the tire blowout occurs is decreased, the motor control unit is configured to increase the output torque of the motor, wherein
two front wheels of the electric vehicle are coaxial wheels or two rear wheels of the electric vehicle are coaxial wheels, and a left front wheel and a right rear wheel of the electric vehicle are diagonal wheels or a right front wheel and a left rear wheel of the electric vehicle are diagonal wheels.

9. The motor control unit according to any one of claims 1 to 8, wherein the wheel on which the tire blowout occurs is a coaxial wheel or a diagonal wheel of the wheel corresponding to the motor control unit, the two front wheels of the electric vehicle are the coaxial wheels or the two rear wheels of the electric vehicle are the coaxial wheels, and the left front wheel and the right rear wheel of the electric vehicle are the diagonal wheels or the right front wheel and the left rear wheel of the electric vehicle are the diagonal wheels; and
that the motor control unit is configured to adjust the output torque of the motor comprises:
the motor control unit is configured to control the motor to decrease the torque output, or control the motor to output reverse torque, wherein a direction of the reverse torque is opposite to a direction of the rotational speed of the motor.

10. The motor control unit according to claim 9, wherein the wheel on which the tire blowout occurs is the diagonal wheel of the wheel corresponding to the motor control unit; and
that the motor control unit is configured to adjust the output torque of the motor comprises:
after the output torque of the motor corresponding to the coaxial wheel of the wheel on which the tire blowout occurs is decreased, the motor control unit is configured to decrease the output torque of the motor.

11. The motor control unit according to claim 9, wherein the wheel on which the tire blowout occurs is the coaxial wheel of the wheel corresponding to the motor control unit; and
that the motor control unit is configured to adjust the output torque of the motor comprises:
before torque outputs of the other three motors are adjusted, the motor control unit is configured to control the motor to increase the torque output.

12. A method for controlling a tire blowout of an electric vehicle, wherein the electric vehicle comprises four motors, four motor control units, and four wheels, and the four motor control units are respectively configured to control the four motors to drive the four wheels; and
the method for controlling the tire blowout comprises:
in a first time period, when a vehicle speed of the electric vehicle is less than or equal to a preset vehicle speed, controlling each of the four motors to output output torque indicated by a torque signal;
in a second time period after the first time period, when the vehicle speed of the electric vehicle is greater than the preset vehicle speed, controlling each of the four motors to output output torque indicated by the torque signal, wherein the output torque indicated by the torque signal during the second time period is greater than the output torque indicated by the torque signal during the first time period; and
in a third time period after the second time period, when the vehicle speed of the electric vehicle is greater than the preset vehicle speed and the tire blowout occurs on any one of the four wheels, adjusting torque outputs of three motors corresponding to three wheels other than the any wheel on which the tire blowout occurs.

13. The method for controlling the tire blowout according to claim 12, wherein adjusting the torque outputs of the three motors corresponding to the three wheels other than the any wheel on which the tire blowout occurs comprises:
actively adjusting the torque output torque of each of the three motors to be greater than or less than the output torque indicated by the torque signal.

14. The method for controlling the tire blowout according to claim 12, wherein adjusting the torque outputs of the three motors corresponding to the three wheels other than the any wheel on which the tire blowout occurs comprises:
controlling a motor corresponding to a coaxial wheel of the wheel on which the tire blowout occurs to decrease a torque output;
controlling a motor corresponding to a diagonal wheel of the wheel on which the tire blowout occurs to decrease a torque output; and
controlling a motor corresponding to a same-side wheel of the wheel on which the tire blowout occurs to increase a torque output, wherein
the any wheel on which the tire blowout occurs and the same-side wheel of the any wheel on which the tire blowout occurs are both left wheels of the electric vehicle or right wheels of the electric vehicle.

15. An electric vehicle, wherein the electric vehicle comprises four motors, four motor control units, four wheels, a vehicle control unit, and an accelerator pedal, and the four motor control units are respectively configured to control the four motors to drive the four wheels;
each motor control unit is configured to receive a torque signal output by at least one of the vehicle control unit and the accelerator pedal of the electric vehicle, wherein the torque signal indicates output torque of the motor;
in a traveling process in which a vehicle speed of the electric vehicle is less than or equal to a preset vehicle speed, each motor control unit controls the output torque of the motor based on the indication of the torque signal; and
after a tire blowout occurs on any one of the four wheels in a traveling process in which the vehicle speed of the electric vehicle is greater than the preset vehicle speed, three motor control units other than a motor control unit corresponding to the wheel on which the tire blowout occurs are respectively configured to actively adjust output torque of corresponding three motors to be less than or greater than the output torque indicated by the torque signal.
